# EUROPÄISCHE PATENTSCHRIFT

(11) **EP 0 379 064 B1**
(45) Veröffentlichungstag und Bekanntmachung des Hinweises auf die Patenterteilung: **07.09.1994**
(21) Anmeldenummer: 90100511.6
(22) Anmeldetag: 11.01.1990
(51) Int. Cl.: F16L 41/02, F16L 41/03, F16L 37/08, F16L 39/00

(54) **Verbindungsstecker mit Rastfunktion für fluidführende Leitungen**
Connector with locking function for fluid transporting conduits
Connecteur à accrochage pour canalisations de fluides

(30) Priorität: 16.01.1989 DE 3901104
(43) Veröffentlichungstag der Anmeldung: 25.07.1990
(73) Patentinhaber: WOCO Franz-Josef Wolf & Co., D-63628 Bad Soden-Salmünster (DE); MERCEDES-BENZ AG, 70327 Stuttgart (DE)
(72) Erfinder: Wolf, Franz Josef, D-6483 Bad Soden-Salmünster (DE); Frischkorn, Heinz, D-6497 Steinau (DE); Kaminski, Peter, D-6460 Gelnhausen 4 (DE); Feichtiger, Dieter, D-7031 Aidlingen 1 (DE); Schumacher, Josef, D-7410 Reutlingen 26 (DE); Weikert, Günter, D-7252 Weil der Stadt 5 (DE); Schneider, Wolfgang, D-7260 Calw 4 (DE)
(74) Vertreter: Jaeger, Klaus, Dr.

(56) Entgegenhaltungen:
- EP-A- 0 279 062
- DE-A- 2 542 284
- DE-A- 3 529 052
- US-A- 4 730 856

## Beschreibung

Die vorliegende Erfindung betrifft eine Steckverbindung mit Rastfunktion für fluidführende Leistungen, der im Oberbegriff des Patentanspruchs 1 genannten Art.

Steckverbindungen der in Rede stehenden Art werden beispielsweise, jedoch keineswegs ausschließlich, im Automobilbau verwendet, um einen Fluidstrom, beispielsweise Luft, die entweder mit Über- oder Unterdruck beaufschlagt ist, von einem Aggregat, beispielsweise einer Pumpe oder Unterdruckquelle, in ein Leitungssystem einzuspeisen und zu verteilen. Dazu wird der Verbindungsstecker unter Herstellung einer dichtenden Verbindung auf ein Sockelteil, beispielsweise das Gehäuse eines Aggregates, aufgesteckt, worauf die dafür vorgesehenen Steckanschlüsse mit einem Fluidleitungssystem verbunden werden. Um die dichtende Steckverbindung von den beispielsweise durch die Fluidleitung aufgebrachten Zugkräften zu entlasten, und den Verbindungsstecker auf dem Sockelteil zu fixieren, ist üblicherweise eine Befestigungsvorrichtung vorgesehen.

Es ist bekannt, diese Befestigung des Verbindungssteckers auf dem Sockelteil durch eine einfache Schraubverbindung vorzunehmen. Die Herstellung einer solchen Schraubverbindung ist jedoch zeitaufwendig, was insbesondere bei einem Artikel der Massenfertigung, der vorzugsweise in einem Kraftfahrzeug, ebenfalls einem Artikel der Massenfertigung, verwendet wird, überaus hohe Montagekosten verursacht. Hinzu kommt, daß gattungsgemäße Verbindungsstecker aus Platzgründen häufig sehr unzugänglich, beispielsweise hinter Verkleidungen oder dergleichen, montiert werden müssen, so daß die Verwendung eines Montagewerkzeugs unmöglich oder doch zumindest sehr erschwert ist.

Es ist weiterhin bekannt, zur Vermeidung dieser Nachteile eine elastische Rastvorrichtung zwischen Verbindungsstecker und Sockelteil vorzusehen, wobei ohne Montagewerkzeug eine sichere Verbindung zwischen Verbindungsstecker und Sockelteil nach Art eines Schnappverschlusses hergestellt werden soll. Die Rastvorrichtung besteht dabei aus mindestens einem federnden Rastelement, beispielsweise einer Federzunge, die beispielsweise am Sockelelement befestigt ist und in eine entsprechende Ausnehmung am Verbindungsstecker federnd eingreift. Der Nachteil dieser Rastvorrichtung ist, daß die Verbindung zwischen Verbindungsstecker und Sockelteil in jedem Fall weitgehend elastisch ist, insbesondere, wenn keine reine Zugbelastung, sondern ein Kipp- oder Drehmoment auf den Verbindungsstecker wirkt. Dadurch wird zum einen die Dichtfunktion der Steckverbindung zwischen Verbindungsstecker und Sockelteil beeinträchtigt und zum anderen ist ein unbeabsichtigtes Lösen der Rastverbindung unter den oben angeführten Belastungsbedingungen möglich.

Ein weiterer Nachteil der bekannten Steckverbindungen der in Rede stehenden Art ist, daß durch ihren zumindest im wesentlichen symmetrischen Aufbau ein falsches Aufstecken des Verbindungssteckers auf das Sockelteil nicht ausgeschlossen werden kann, so daß eine erhebliche Sorgfalt des Montagepersonals erforderlich ist, was zum einen erhöhte Taktzeiten bei der Montage bedingt und zum anderen die Quote der Montagefehler deutlich erhöht.

Aus der DE-A-2 542 284 ist eine Mehrfachsteckkupplkung mit Führungselementen und einem einrastenden Verriegelungselement bekannt. Dieses ist zwar verliersicher, jedoch nicht in einer eigentlichen Raststellung vormontierbar. Aus diesem Grund ist ein ungewolltes Einschieben des Verriegelungselements in seine endgültige Raststellung vor und während der Montage nicht auszuschließen, wodurch ein Zusammenstecken der Kupplungsteile verhindert würde. Die Montage der Steckkupplung gestaltet sich dadurch komplizierter und zeitaufwendiger.

Ausgehend von diesem Stand der Technik ist es die Aufgabe der vorliegenden Erfindung, eine Steckverbindung der gattungsgemäßen Art zu schaffen, die gegen alle auftretenden äußeren Kräfte und Momente gesichert unter Herstellung einer fluiddichten Verbindung ohne Montagewerkzeug lösbar und zumindest im wesentlichen starr so auf einem Sockelteil befestigt werden kann, daß die Dichtverbindung zwischen dem Verbindungsstecker und dem Sockelteil durch die angreifenden Kräfte und Momente nicht belastet ist und ein falsches Aufstecken des Verbindungssteckers auf das Sockelteil zuverlässig ausgeschlossen ist.

Zur Lösung dieser Aufgabe schafft die Erfindung eine Steckverbindung für fluidführende Leitungen gemäß der Lehre des Patentanspruchs 1.

Der wesentliche Gedanke der vorliegenden Erfindung beruht also darauf, am Gehäuse des Verbindungssteckers mindestens ein erstes Führungs- und Formelement vorzusehen, das mit mindestens einem dazu komplementären zweiten Führungs- und Formelement am Gehäuse des Sockelteiles beim Aufstecken des Verbindungssteckers auf das Sockelteil zumindest im wesentlichen starr in Eingriff bringbar ist, wobei gleichzeitig eine Sicherung gegen ein ungewolltes Abziehen des Verbindungssteckers im Sockelteil durch mindestens einen Sperrschieber als Abzugsverriegelungsvorrichtung erfolgt, der in Sperrstellung einen komplementären Hinterschnitt am Sockelgehäuse hintergreift. Die Verschieberichtung des Sperrschiebers liegt dabei zumindest im wesentlichen in der Trennfläche zwischen Verbindungsstecker und Sockelteil.

Zum Aufstecken eines erfindungsgemaßen Verbindungssteckers auf ein Sockelteil wird zuerst der Verbindungsstecker in eine entsprechende Montagestellung, das heißt eine Stellung, in der das erste Führungs- und Formteil am Verbindungsstecker mit dem zweiten Führungs- und Formteil am Sockelteil in Eingriff gebracht werden kann, gebracht. Diese Montagestellung ist optisch leicht zu erkennen. Ein falsches Aufstecken des Verbindungssteckers ist nicht mehr möglich, da in diesem Fall die Führungs- und Formteile an Verbindungsstecker und Sockelteil nicht mehr in Eingriff gebracht werden können. Durch die entsprechende Ausgestaltung der Führungs- und Formteile ist gleichzeitig eine Codierung des Verbindungssteckers möglich, die nötig wird, falls innerhalb eines Fluidleitungssystemes oder einer Montageserie verschiedene Verbindungsstecker verwendet werden sollen. Mit anderen Worten, wenn bei verschiedenen Verbindungssteckern die Führungs- und Formteile verschieden gestaltet oder angeordnet sind, ist bei der Montage der Verbindungsstecker eine Verwechslung nicht mehr möglich, selbst wenn die Fluidsteckanschlüsse zum Sockelteil identisch sind.

Die Führungs- und Formelemente an Verbindungsstecker und Sockelteil sind so gestaltet und angeordnet, daß beim Zusammenstecken der beiden Teile zuerst diese Führungs- und Formelemente ineinandergreifen, bevor die fluiddichte Steckverbindung hergestellt wird. Dadurch wird sichergestellt, daß die Steckanschlüsse von Verbindungsstecker und Sockelteil relativ zueinander exakt positioniert sind und beim Zusammenstecken die Dichtung nicht beschädigt wird.

Die Führungs- und Formelemente sind vorzugsweise so ausgestaltet, daß im montierten Zustand, das heißt Verbindungsstecker auf Sockelteil, die Kräfte, die zumindest im wesentlichen parallel zur Trennfläche zwischen Verbindungsstecker und Sockelteil verlaufen, durch die in Eingriff befindlichen Führungs- und Formelemente von Verbindungsstecker und Sockelteil aufgenommen werden. Mit anderen Worten, lediglich die Kräfte, die im wesentlichen senkrecht zur Trennfläche zwischen Verbindungsstecker und Sockelteil und damit im wesentlichen in Montagerichtung oder parallel dazu verlaufen, werden nicht durch die im Eingriff befindlichen Führungs- und Formelemente aufgenommen. Durch diese Anordnung ist in jedem Fall gewährleistet, daß die eigentliche Dichtstelle zwischen Verbindungsstecker und Sockelteil durch angreifende äußere Kräfte nicht mechanisch belastet und deshalb nicht beschädigt wird.

Zur Aufnahme von senkrecht zur Trennfläche zwischen Verbindungsstecker und Sockelteil wirkenden Kräften ist der Verbindungsstecker mit einer Verriegelungsvorrichtung gegen ein ungewolltes Abziehen des Verbindungssteckers vom Sockelteil versehen. Diese Abzugsverriegelungsvorrichtung besteht aus einem Sperrschieber, der zumindest im wesentlichen in der Trennfläche zwischen Verbindungsstecker und Sockelteil zwischen einer offenen Stellung und einer Sperrstellung verschiebbar ist. In Sperrstellung hintergreift der Sperrschieber einen komplementären Hinterschnit t am Sockelgehäuse, so daß ein Abziehen des Verbindungssteckers vom Sockelteil nicht mehr möglich ist.

Wenn die Abzugsverriegelungsvorrichtung entsprechend groß dimensioniert ist, kann sie auch Kräfte, die im wesentlichen parallel zur Trennfläche verlaufen, und Kipp- und Drehmomente aufnehmen. Dadurch können dann die Führungs- und Formelemente weitgehend von der Aufgabe, angreifende Kräfte aufzunehmen, entlastet werden und brauchen nur noch die Aufgaben der Sicherstellung einer seitenrichtigen Montage und der Codierung übernehmen. Von wesentlicher Bedeutung ist auch bei dieser Ausgestaltung, daß die Dichtstelle zwischen Verbindungsstecker und Sockelteil nicht mechanisch belastet und dadurch beschädigt wird.

Zum Lösen der Steckverbindung wird der Sperrschieber entgegen der Sperrichtung in seine erste, offene Position gebracht, worauf der Verbindungsstecker einfach vom Sockelteil abgezogen werden kann.

Nach einer bevorzugten Ausgestaltung der Erfindung wird der Sperrschieber in einer im Gehäuse des Verbindungssteckers ausgebildeten Sperrschieberführung linear geführt. Diese Sperrschieberführung weist dabei zwei in Verschieberichtung hintereinander angeordnete Ausnehmungen auf, während gleichzeitig der Sperrschieber mindestens ein federbeaufschlagtes Rastelement aufweist. Das Rastelement kann dabei als separates Teil ausgebildet sein, ist aber vorzugsweise einstückig als Federzunge am Sperrschieber angeformt. An seiner den Ausnehmungen der Sperrschieberführung zugewandten Seite weist das Rastelement eine zweiseitig angefaste Nase auf. Bei der Vormontage des Verbindungssteckers wird der Sperrschieber so in die Sperrschieberführung eingeschoben, daß die Nase des Rastelementes in die erste Ausnehmung eingreift. In dieser ersten Raststellung ist die Abzugsverriegelungsvorrichtung offen, während jedoch gleichzeitig der Sperrschieber zuverlässig, sicher und unverlierbar in dieser offenen Position gehalten wird. Nach dem Aufstecken des Verbindungssteckers auf das Sockelteil wird der Sperrschieber von Hand in die Sperrstellung gedrückt, wobei gleichzeitig das in Sperrichtung gesehen vordere axiale Ende des Sperrschiebers in den dazu komplementären Hinterschnitt des Sockelgehäuses eingreift und die Nase des Rastelementes des Sperrschiebers in die zweite Ausnehmung der Sperrschieberführung einrastet, so daß der Sperrschieber gegen ein ungewolltes Lösen gesichert ist.

An seinem der Sperrseite gegenüberliegenden axialen Ende weist der Sperrschieber vorzugsweise eine Ausnehmung auf, die zum Eingriff eines Werkzeuges, beispielsweise eines Schraubendrehers, zum Lösen der Abzugsverriegelungsvorrichtung dient.

Die beidseitige Anfasung der Nase des Rastelementes am Sperrschieber bestimmt die Schließkraft der Abzugsverriegelungsvorrichtung bzw. die zum Lösen der Verbindung notwendige Kraft. So ist es von Vorteil, die in Sperrichtung vordere Fases der Nase flacher anzufasen, um beim Verschließen von Hand eine geringe Kraft zum Verschieben des Sperrschiebers aufwenden zu müssen, während die Nase an der gegenüberliegenden Seite vorzugsweise steil angefast ist, um eine sichere und feste Verbindung zu gewährleisten. Die zum Lösen notwendigen höheren Kräfte spielen keine entscheidende Rolle, da dazu in der Regel ein Werkzeug verwendet wird.

Vorzugsweise weist die zum Verbindungsstecker weisende Fläche des Sockelteiles einen im wesentlichen senkrecht zu dieser Fläche herausragenden portalartigen Vorsprung auf. Portalartig bedeutet hier insbesondere, daß dieser Vorsprung eine portalartige Ausnehmung aufweist, in die der Sperrschieber im wesentlichen formschlüssig eingreift.

Das erste Führungs- und Formelement am Verbindungsstecker wird bei einem bevorzugten Ausführungsbeispiel im einfachsten Fall durch die Außenkontur des Gehäuses des Verbindungssteckers gebildet. Die Außenkontur weist dabei einen oder mehrere Vorsprünge und/oder Ausnehmungen auf, die insbesondere vorzugsweise asymmetrisch angeordnet sind, so daß ein leichtes Erkennen der richtigen Steckerposition möglich ist. Diese Ausnehmungen und/oder Vorsprünge werden dann beim Zusammenstecken von Verbindungsstecker und Sockelteil in Eingriff gebracht. Die Vorsprünge und/oder Ausnehmungen können sich über die gesamte Höhe des Verbindungssteckers, gemessen von der Trennfläche, erstrecken oder, alternativ dazu, nur über einen bestimmten Teil der Höhe.

Bei dem bevorzugten Ausführungsbeispiel ist ein Teil des Steckergehäuses nach unten hin zur Trennfläche offen und bildet einen vom übrigen Gehäuse abgetrennten domartigen Vorsprung. In diese domartige Vertiefung greift beim Herstellen der Steckverbindung ein entsprechender, sockelartiger Vorsprung auf der zum Verbindungsstecker weisenden Fläche des Sockelteiles ein. Ebenfalls vorzugsweise ist der Querschnitt dieser domartigen Vertiefung und des sockelartigen Vorsprungs nicht rotationssymmetrisch, wodurch der Eingriff der beiden Führungs- und Formteile eine Festlegung des Verbindungssteckers am Sockelteil gegen alle im wesentlichen parallel zur Trennfläche wirkenden Kräfte, sowie gegen alle auftretenden Dreh- und Kippmomente gewährleistet.

Insbesondere, wenn bei einer erfindungsgemäßen Steckverbindung die Codierung oder die Sicherung gegen ein falsches Aufstecken im Vordergrund steht, das heißt, die auftretenden Kräfte im wesentlichen durch die Abzugsverriegelungsvorrichtung aufgenommen werden sollen, wird bei einer bevorzugten Ausgestaltung eines Verbindungssteckers das erste Führungs- oder Formelement durch eine Nut in einer Seitenwand des Steckergehäuses gebildet, wobei diese Nut senkrecht zur Trennfläche zwischen Verbindungsstecker und Sockelteil und zur Trennfläche hin offen verläuft. Beim Zusammenstecken von Verbindungsstecker und Sockelteil wird diese Nut mit einem federartigen Vorsprung an einer Seitenwand, die sich senkrecht zur Trennfläche erstreckt, des Sockelteiles in Eingriff gebracht. Durch eine entsprechende Länge und/oder Position der Nut und des federartigen Vorsprunges können auf einfache Weise zusammengehörige Verbindungsstecker-Sockelteilpaarungen codiert und das Aufstecken eines falschen Verbindungssteckers vermieden werden.

Nach einem weiteren bevorzugten Ausführungsbeispiel der Erfindung besteht das erste Führungs- und Formelement aus einem stabförmigen oder rohrförmig zur Trennfläche hin offenen Zapfen, der in einem ebenfalls zur Trennfläche hin offenen Teil des Steckergehäuses einstückig an diesem angeformt ist. Beim Zusammenstecken von Verbindungsstecker und Sockelteil kommt dieses erste Führungs- und Formelement in Eingriff mit einem ebenfalls stab- oder rohrförmigen Zapfen, der den ersten Führungszapfen entweder umgreift oder in diesen eingreift. Diese Ausgestaltung der Führungs- oder Formelemente gewährleistet eine Sicherung gegen alle Kräfte, die im wesentlichen parallel zur Trennfläche verlaufen, während vor allen Drehmomente von der Abzugsverriegelungsvorrichtung aufgenommen werden müssen.

Die Steckanschlüsse zum Anschluß der fluidführenden Leitungen können sich prinzipiell auf allen Seitenflächen des Steckergehäuses, mit Ausnahme der Fläche, die zur Trennfläche zwischen Verbindungsstecker und Sockelteil weist, befinden. Vorzugsweise jedoch befinden sich diese Steckanschlüsse an zwei gegenüberliegenden Seiten des Steckergehäuses, die senkrecht zur Trennfläche verlaufen, so daß eine Verteilung des Fluidstromes, beispielsweise vom Sockelteil zur Fluidleitung, nach Art eines T-Stückes erfolgt. Die Anzahl der Fluidleitungssteckanschlüsse ist beliebig und hängt lediglich von der Größe des Verbindungssteckers und der benötigten Verteilerfunktion ab. Zur Erzielung eines hohen Verteilungsgrades und damit bei gleicher Steckergröße einer hohen Steckanschlußdichte verlaufen diese Steckanschlüsse vorzugsweise in mehreren zueinander versetzten Ebenen. Mit anderen Worten, die Steckanschlüsse sind an mindestens einer Seitenfläche reihenweise möglichst dicht gepackt, wobei die Verbindung der Anschlüsse untereinander entsprechend der gewünschten Verteilung durch Kanäle im Steckergehäuse erfolgt.

Jeder Steckanschluß zu den fluidführenden Leitungen besteht in an sich bekannter Weise aus einem axial aus dem Steckergehäuse hervorragenden Rohrstutzen, dessen axial äußeres, vom Steckergehäuse wegweisendes Ende von einer Gruppe von radial federnden mit Rastelementen versehenen Zungen gebildet wird. In die Bohrung des Steckanschlusses sind im axial Inneren, zum Steckergehäuse weisenden Bereich je ein Stützring und ein Dichtring form- und/oder kraftschlüssig eingelegt. Der Dichtring ist in herkömmlicher Weise als O-Ring ausgebildet und wird axial inne n von einem Absatz im Steckanschluß und axial außen vom Stützring gehalten. Der Innendurchmesser des Stützringes ist dabei zumindest geringfügig größer als der Innendurchmesser des Dichtringes. Beim Aufstecken eines im wesentlichen komplementär geformten Schlauchsteckers wird der vordere, im wesentlichen zylindrisch geformte Bereich des Schlauchsteckers durch den Dichtring gesteckt und stellt dadurch eine zumindest im wesentlichen fluiddichte und druckfeste Verbindung her. Der Stecker weist weiterhin eine Hinterschneidung auf, in die die Rastelemente der radial federnden Zungen eingreifen, so daß die Steckverbindung gegen ein ungewolltes Abziehen des Schlauchsteckers vom Steckanschluß zuverlässig gesichert ist.

Der Steckanschluß auf der dem Sockelteil zugewandten Seite des Verbindungssteckers weist prinzipiell den gleichen Aufbau auf. Jedoch weisen die federnden Zungen vorzugsweise keine Rastelemente auf, da die Sicherung gegen ein ungewolltes Abziehen des Verbindungssteckers vom Sockelteil durch die Abzugsverriegelungsvorrichtung vorgenommen wird. Der Verbindungsstecker wird also einfach auf aus dem Sockelteil hervorragende Anschlußrohrstutzen, die durch den Dichtring reichen, aufgesteckt. Zur Erzielung einer möglichst großen und ebenen Anlagefläche zwischen Verbindungsstecker und Sockelteil ist es von Vorteil, wenn die axial äußeren Enden des zum Sockelteil weisenden Steckanschlusses im wesentlichen bündig mit der Trennfläche zwischen Verbindungsstecker und Sockelteil abschließen. Die Anzahl der Steckanschlüsse zum Sockelteil hängt dabei im wesentlichen von der Größe des beispielsweise zu verteilenden Fluidstromes ab.

Das Steckergehäuse mit den einstückig angeformten Steckanschlüssen besteht, ebenso wie die Abzugsverriegelungsvorrichtung, vorzugsweise aus Kunststoff und wird als Teil einer Massenfertigung vorzugsweise im Spritzgrußverfahren hergestellt.

Die Erfindung ist im folgenden anhand mehrerer Ausführungsbeispiele in Verbindung mit den beiliegenden Zeichnungen näher erläutert. Es zeigen die
- Fig. 1: ein erstes Ausführungsbeispiel eines Verbindungssteckers der vorliegenden Erfindung in Aufsicht, bei dem das Führungs- oder Formelement nur durch die Außenkontur gebildet wird;
- Fig. 2: das Ausführungsbeispiel nach Fig. 1 in der Ansicht von unten, das heißt von der Trennfläche zwischen Verbindungsstecker und Sockelteil her, das zusätzlich mit einem weiteren zapfenartigen Führungs- und Formelement versehen ist;
- Fig. 3: das Ausführungsbeispiel nach Fig. 1 in seitlicher Ansicht, das zusätzlich mit einer Nut zur seitenrichtigen Montage versehen ist; und
- Fig. 4: schematisch im Schnitt eine Abzugsverriegelungsvorrichtung gemäß der vorliegenden Erfindung.

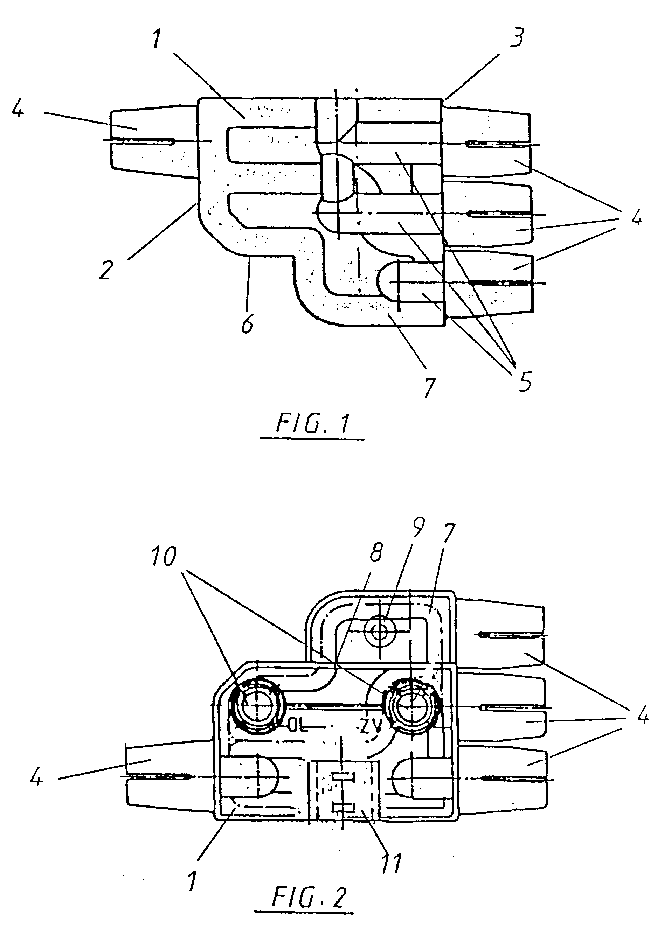

In Fig. 1 ist ein erstes Ausführungsbeispiel eines Verbindungssteckers der vorliegenden Erfindung in Aufsicht dargestellt. Der Verbindungsstecker besteht aus einem Gehäuse 1 und weist an zwei gegenüberliegenden Seiten 2 und 3 Steckanschlüsse 4 zum Anschluß von nicht dargestellten fluidführenden Schlauchleitungen auf. Die Steckanschlüsse 4 sind durch Kanäle 5, die teilweise in dieser Ansicht nicht sichtbar im Gehäuse 1 und teilweise rohrartig auf dem Gehäuse 1 verlaufen, entsprechend der gewünschten Verteilungsfunktion verbunden. Die Außenkontur 6 des Gehäuses 1 ist asymmetrisch gestaltet und weist auf einer Seite eine Ausbuchtung 7 auf. Beim Aufstecken des Verbindungssteckers auf ein nicht dargestelltes Sockelteil greift diese Ausbuchtung 7 beispielsweise in eine komplementär gestaltete Ausnehmung in einer Seitenwand des Sockelteiles ein, wodurch zum einen der Verbindungsstecker bis zu einem gewissen Grade drehgesichert ist und zum anderen ein falsches Aufstecken unmöglich ist.

Wie man aus Fig. 2, die im wesentlichen das gleiche Ausführungsbeispiel von unten, das heißt von der Trennfläche her zeigt, ersieht, springt die Ausbuchtung 7 domartig aus der Seitenwand 8 des Gehäuses 1 hervor und bildet somit einen funktionell und räumlich vollständig abgetrennten Gehäuseabschnitt. Im Unterschied zum Verbindungsstecker nach Fig. 1 weist der Verbindungsstecker nach Fig. 2 jedoch zusätzlich zum ersten Fuhrungs- und Formelement in Form einer Ausbuchtung 7 ein zweites Führungs- und Formelement in Form eines rohrförmigen Zapfens 9 auf. Der rohrförmige Zapfen 9 ist einstückig an den Boden des Steckergehäuses 1 im Bereich des Gehäuseabschnittes der Ausbuchtung 7 angeformt. Beim Aufstecken des Verbindungssteckers auf ein wiederum nicht dargestelltes Sockelteil wird dieses zapfenartige Führungs- und Formteil 9 mit einem komplementären zapfenartigen Führungs- und Formteil am Sockelelement in Eingriff gebracht, wobei der zweite Führungszapfen den ersten Führungszapfen 9 entweder rohrförmig umgreift oder zapfenartig in diesen eingreift. Dadurch ist zusätzlich zur Außenkonturfest legung eine Sicherung gegen äußere Kräfte und Kippmomente parallel zur Trennfläche gegeben.

In der Ansicht von Fig. 2 sieht man weiterhin die Steckanschlüsse 10 zum fluiddichten und druckfesten Verbinden des Verbindungssteckers mit dem Sockelteil, sowie, schematisch, die Sperrschieberführung 11 der Abzugsverriegelungsvorrichtung 20.

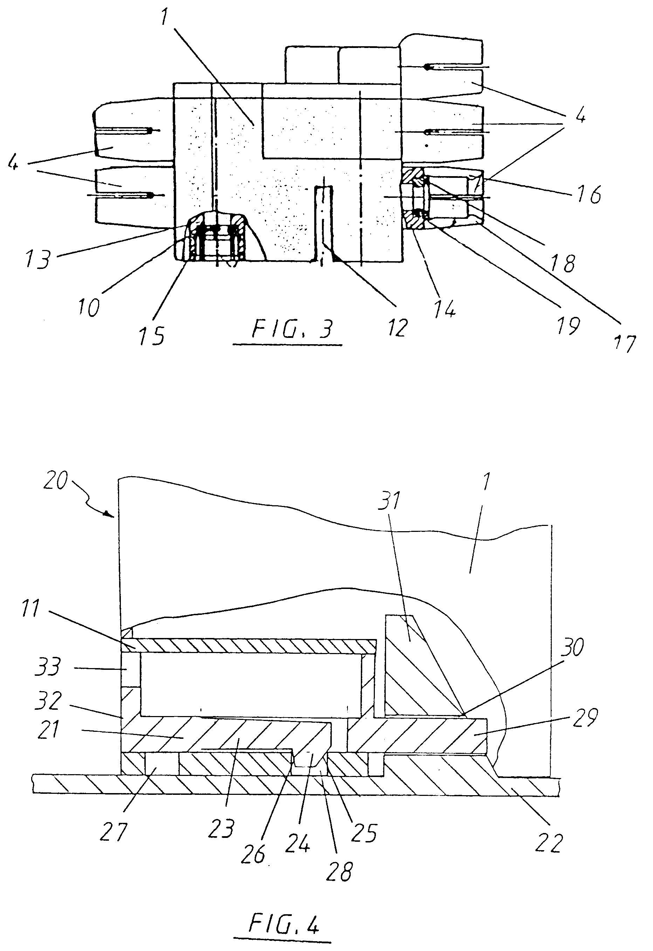

Fig. 3 zeigt ebenfalls im wesentlichen das gleiche Ausführungsbeispiel wie Fig. 1. Jedoch springt hier die domartige Ausbuchtung 7 nicht über die gesamte Höhe des Steckergehäuses 1 aus der Seitenwand 8 vor, sondern lediglich über einen Teil dieser Höhe. Zusätzlich zum Führungs- und Formelement in Form der Ausbuchtung 7 weist die Seitenwand 8 eine senkrecht zur Trennfläche zwischen Verbindungsstecker und Sockelteil verlaufende zur Trennfläche hin offene Nut 12 auf. Bei der Montage des Steckers auf das nicht dargestellte Sockelteil greift in diese Nut 12 eine Feder, die auf einer Seitenwand des Sockelteiles angebracht ist, ein. Durch die Position und Länge von Nut 12 und Feder kann eine einfache Codierung der zulässigen Stecker-Sockelteil-Kombinationen realisiert werden.

In Fig. 3 sind weiterhin die Steckanschlüsse 4 zu den fluidführenden Schlauchleitungen und ein Steckanschluß 10 zum Sockelteil dargestellt. Beide Steckanschlußtypen bestehen prinzipiell aus einem Rohrstutzen 13,14, dessen axial äußeres Ende von einer Gruppe von radial federnden Zungen 15,16 gebildet wird. Die Zungen 16 an den Steckanschlüssen 4 weisen ein Rastelement in Form einer Nase 17 zur axialen Sicherung der Schlauchsteckverbindung auf. In beide Steckanschlußtypen 4,10 ist je ein Stützring 18 und ein Dichtring 19 eingelegt.

Fig. 4 zeigt schematisch im Schnitt eine Abzugsverriegelungsvorrichtung 20, die in den drei oben beschriebenen Ausführungsbeispielen Verwendung findet. Die Abzugsverriegelungsvorrichtung besteht aus einem Sperrschieber 21, der in einer linearen Sperrschieberführung 11 zumindest im wesentlichen in der Trennfläche zwischen Verbindungsstecker und Sockelteil verschiebbar geführt wird. Der Sperrschieber 21 weist ein federndes Rastelement 23 auf, das einstückig an den Sperrschieber 21 nach Art einer Federzunge angeformt ist. An seinem beweglichen axialen Ende weist das Rastelement 23 eine Rastnase 24 mit zwei Fasen 25 und 26 auf. Die Sperrschiebeführung 11 weist auf ihrer zur Trennfläche weisenden Seite 2 in Verschieberichtung des Sperrschiebers 21 hintereinander angeordnete Ausnehmungen 27 und 28 auf.

Bei der Vormontage des Verbindungssteckers wird der Sperrschieber 21 so in die im Gehäuse 1 montierte Sperrschieberführung 11 eingeführt, daß das Rastelement 23 mit seiner Nase 24 in die erste Ausnehmung 27 eingreift. In dieser vormontierten Stellung wird der Sperrschieber 21 bei einer geöffneten Stellung der Abzugsverriegelungsvorrichtung 20 zuverlässig und unverlierbar gehalten. Nach dem Aufsetzen des Verbindungssteckers auf das Sockelteil wird der Sperrschieber 21 in Sperrichtung geschoben, bis das Rastelement 23 mit der Rastnase 24 in die zweite Ausnehmung 28 eingreift. In dieser Sperrstellung ragt das vordere axiale Ende 29 des Sperrschiebers 21 formschlüssig in eine portalartige Ausnehmung 30 in einem aus der zur Trennfläche weisenden Seite 22 des Sockelteiles ragenden Vorsprung 31 und verriegelt so den Verbindungsstecker am Sockelteil.

An seinem der Sperrseite gegenüberliegenden axialen Ende 32 weist der Sperrschieber eine Ausnehmung 33 zum Eingriff eines Werkzeuges zum Lösen der Verriegelung auf.

Erfindungsgemäße Steckverbindungen können überall verwendet werden, wo Fluidleitungen, die unter einem relativ geringen über- oder Unterdruck stehen, fluiddicht und druckfest miteinander und mit einem Sockelteil verbunden werden müssen. Insbesondere jedoch finden erfindungsgemäße Steckverbindungen Verwendung in der Automobilindustrie, insbesondere, jedoch keineswegs ausschließlich, beim Anschluß von Unterdruckleitungssystemen in Kraftfahrzeugen.

## Patentansprüche

1. Steckverbindung für fluidführende Leitungen mit einem Verbindungsstecker und einem Sockelteil, wobei der Verbindungsstecker unter Herstellung einer fluiddichten und druckfesten Verbindung unmittelbar auf dem Sockelteil zugfest fixierbar ist, mit mindestens einem ersten Steckanschluß auf seiner dem Sockelteil zugewandten Seite und mindestens einem weiteren Steckanschluß auf mindestens einer seiner anderen Seiten, wobei weiter ein erstes Führungs- und Formelement am Steckergehäuse, das mit einem dazu komplementären zweiten Führungs- und Formelement am Gehäuse des Sockelteils beim Aufstecken des Verbindungssteckers auf das Sockelteil zumindest im wesentlichen starr in Eingriff bringbar ist, und ein im wesentlichen in der Trennfläche zwischen Verbindungsstecker und Sockelteil verschiebbarer Sperrschieber mit federbeaufschlagtem Rastelement als Abzugsverriegelungsvorrichtung, der in Sperrstellung einen komplementären Hinterschnitt am Sockelgehäuse hintergreift, vorgesehen sind,
**gekennzeichnet** durch
zwei in Einschubrichtung des Sperrschiebers hintereinander angeordnete Ausnehmungen (27,28) in der im Gehäuse (1) des Verbindungssteckers ausgebildeten Sperrschieberführung (11), in die das Rastelement (23) des Sperrschiebers (21) jeweils in rastenden lösbaren Eingriff bringbar ist, wobei die erste Raststellung einer nicht sperrenden Vormontagestellung und die zweite Raststellung der Sperrstellung des Sperrschiebers (21) entspricht und wobei der Sperrschieber (21) beim vormontierenden Einschieben in das Steckergehäuse (1) zunächst in der ersten Raststellung einrastet.

2. Steckverbindung nach Anspruch 1,
dadurch **gekennzeichnet,**
daß der Hinterschnitt am Sockelteil als Portal oder portalartige Ausnehmung (30,31) ausgebildet ist.

3. Steckverbindung nach Anspruch 1 oder 2,
**gekennzeichnet** durch
eine Ausnehmung (33) an dem der Sperrseite gegenüberliegenden axialen Ende (32) des Sperrschiebers (21) zum Eingriff eines Werkzeuges zum Lösen der Abzugsverriegelung (20).

4. Steckverbindung nach einem der Ansprüche 1 bis 3,
dadurch **gekennzeichnet,**
daß das erste Führungs- und Formelement (7) durch mindestens einen Teil der Außenkontur (6) des Steckergehäuses (1) gebildet wird..

5. Steckverbindung nach einem der Ansprüche 1 bis 3,
dadurch **gekennzeichnet,**
daß das erste Führungs- und Formelement eine senkrecht zur Trennfläche zwischen Verbindungsstecker und Sockelteil in einer Seitenwand (8) des Steckergehäuses (1) verlaufende zur Trennfläche hin offene Nut (12) ist.

6. Steckverbindung nach einem der Ansprüche 1 bis 3,
dadurch **gekennzeichnet,**
daß das erste Führungs- und Formelement ein stabförmiger oder rohrförmig zur Trennfläche hin offener Zapfen (9) ist, der in einem ebenfalls zur Trennfläche hin offenen Teil (7) des Steckergehäuses (1) einstückig an diesem angeformt ist, und daß das zweite Führungs- und Formelement am Sockelteil den stab- oder rohrförmigen Zapfen (9) entweder umgreift oder zapfenartig in diesen eingreift.

7. Steckverbindung nach einem der Ansprüche 1 bis 6,
dadurch **gekennzeichnet,**
daß die nicht zum Sockelteil weisenden Steckanschlüsse (4) in mehreren zueinander versetzten Ebenen verlaufen.

8. Steckverbindung nach einem der Ansprüche 1 bis 7,
dadurch **gekennzeichnet,**
daß die nicht zum Sockelteil weisenden Steckanschlüsse (4) aus einem axial aus dem Gehäuse (1) hervorragenden Rohrstutzen (14) bestehen, dessen axial äußeres Ende von einer Gruppe von radial federnden mit Rastelementen (17) versehenen Zungen (16) gebildet wird und in dessen Bohrung im axial inneren Bereich je ein Stützring (18) und ein Dichtring (19) form- und/oder kraftschlüssig eingelegt sind.

9. Steckverbindung nach einem der Ansprüche 1 bis 8,
dadurch **gekennzeichnet,**
daß die zum Sockelteil weisenden Steckanschlüsse (10) aus einem axialen Rohrstutzen (13) bestehen, der im wesentlichen bündig mit der Trennfläche zwischen Verbindungsstecker und Sockelteil abschließt, dessen axial äußeres Ende von einer Gruppe radial federnder Zungen (15) gebildet wird und in dessen Bohrung im axial inneren Bereich je ein Stützring (18) und ein Dichtring (19) form- und/oder kraftschlüssig eingelegt sind.

10. Steckverbindung nach einem der Ansprüche 1 bis 9,
dadurch **gekennzeichnet,**
daß das Steckergehäuse (1) und die Abzugsverriegelungsvorrichtung (20) aus Kunststoff bestehen und im Spritzgußverfahren hergestellt sind.

11. Steckverbindung nach einem der Ansprüche 1 bis 10,
**gekennzeichnet** durch
seine Verwendung im Unterdruckleitungssystem von Kraftfahrzeugen.

## Claims

1. Plug connection for lines carrying fluid, which comprises a connection plug and a base part, said connection plug being able to be fastened directly on the base part in such a manner as to resist tensile forces and to make a fluidtight, pressure-proof connection, and comprises at least a first plug connector element on its side facing the base part and at least one additional plug connector element on at least one of its other sides, while in addition there are provided a first shaped guide element which is arranged on the plug casing and which can be brought at least substantially rigidly into engagement with a complementary second shaped guide element on the casing of the base part when the connection plug is fitted onto the base part, and a locking slide which is slidable substantially in the interface between the connection plug and the base part and has a spring-loaded catch element as anti-pull-off device and which in the locking position engages behind a complementary undercut in the base casing, characterized by two recesses (27, 28) which are arranged one behind the other, in the direction in which the locking slide is pushed in, in the locking slide guide (11) formed in the casing (1) of the connection plug, and into each of which the catch element (23) of the locking slide (21) can be brought into releasable catch engagement, the first catch position corresponding to a non-locking preassembly position and the second catch position corresponding to the locking position of the locking slide (21), and the locking slide (21) engaging first in the first catch position when inserted for preassembly purposes into the plug casing (1).

2. Plug connection according to Claim 1, characterized in that the undercut on the base part is in the form of a portal or a portal-like recess (30, 31).

3. Plug connection according to Claim 1 or 2, characterized by a recess (33) at the axial end (32) of the locking slide (21) which is remote from the locking end, for the engagement of a tool for the release of the anti-pull-off device (20).

4. Plug connection according to one of Claims 1 to 3, characterized in that the first shaped guide element (7) is formed by at least a part of the external contour (6) of the plug casing (1).

5. Plug connection according to one of Claims 1 to 3, characterized in that the first shaped guide element is a groove (12) which extends, at right angles to the interface between the connection plug and the base part, in a side wall (8) of the plug casing (1) and is open towards said interface.

6. Plug connection according to one of Claims 1 to 3, characterized in that the first shaped guide element is a rod-like pin (9) or a pin (9) open like a tube towards the interface, which pin is formed integrally on the plug casing (1) in a part (7) of the latter which is likewise open towards the interface, and in that the second shaped guide element on the base part either engages around the rod-like or tubular pin (9) or engages like a pin therein.

7. Plug connection according to one of Claims 1 to 6, characterized in that the plug connector elements (4) which do not point towards the base part extend in a plurality of planes offset relative to one another.

8. Plug connection according to one of Claims 1 to 7, characterized in that the plug connector elements (4) which do not point towards the base part consist of a tubular connector (14) which projects axially out of the casing (1) and whose axially outer end is formed by a group of radially resilient tongues (16) provided with catch elements (17), and into the bore of each of which a support ring (18) and a sealing ring (19) are inserted positively and/or frictionally in the axially inner region.

9. Plug connection according to one of Claims 1 to 8, characterized in that the plug connector elements (10) which point towards the base part consist of an axial tubular connector (13) which ends substantially flush with the interface between the connection plug and the base part and whose axially outer end is formed by a group of radially resilient tongues (15), and into the bore of each of which a support ring (18) and a sealing ring (19) are positively or frictionally inserted in the axially inner region.

10. Plug connection according to one of Claims 1 to 9, characterized in that the plug casing (1) and the anti-pull-off device (20) are made of plastics material and produced by the injection moulding process.

11. Plug connection according to one of Claims 1 to 10, characterized by its use in the vacuum line system of motor vehicles.

## Revendications

1. Connecteur à fiches pour canalisations de fluides, muni d'une fiche de connexion et d'une pièce de culot, la fiche de connexion pouvant être fixée directement sur cette dernière, de façon résistante à la traction, en fabriquant une connexion étanche aux fluides et résistante à la pression, avec au moins, sur sa face tournée vers la pièce de culot, une première prise de courant embrochable et, sur au moins l'une de ses autres faces, au moins une prise de courant embrochable supplémentaire, un premier élément moulé de guidage étant de plus prévu sur le logement de prise et pouvant être mis en prise, au moins pour l'essentiel de façon fixe, avec un second élément moulé de guidage complémentaire, sur le boîtier de la pièce de culot lors de l'encliquetage de la fiche de connexion sur la pièce de culot, ainsi qu'un registre d'arrêt déplaçable pour l'essentiel dans la surface de séparation, entre la fiche de connexion et la pièce de culot, et muni d'un élément encliquetable commandé par ressort, en tant que dispositif de verrouillage de décharge, registre d'arrêt qui, en position de blocage, saisit par l'arrière une contre-dépouille complémentaire sur le boîtier du culot, caractérisé par deux creux (27, 28) disposés l'un derrière l'autre dans le sens du rack du registre d'arrêt et situés dans la glissière du registre d'arrêt (11) conçue dans le boîtier (1) de la fiche de connexion, glissière du registre d'arrêt dans laquelle l'élément encliquetable (23) du registre d'arrêt (21) peut être mis à chaque fois en prise encliquetable et démontable, la première position de crantage correspondant à une position d'assemblage des sous-groupes non bloquante et la seconde position de crantage à la position de blocage du registre d'arrêt (21), et le registre d'arrêt (21) s'encliquetant d'abord dans la première position de crantage, lors de l'enfichage d'assemblage des sous-groupes dans le logement de prise (1).

2. Connecteur à fiches selon la revendication 1, caractérisé en ce que la contre-dépouille de la pièce de culot est conçue en tant que portique ou en tant que creux semblable à un portique (30, 31).

3. Connecteur à fiches selon les revendications 1 ou 2, caractérisé par un creux (33) du registre d'arrêt (21), creux situé à l'extrémité axiale (32), opposée au côté de blocage, et destiné à l'engrènement d'un outil pour débloquer le verrouillage de décharge (20).

4. Connecteur à fiches selon l'une des revendications 1 à 3, caractérisé en ce que le premier élément moulé de guidage (7) est constitué par au moins une partie du contour extérieur (6) du logement de prise (1).

5. Connecteur à fiches selon l'une des revendications 1 à 3, caractérisé en ce que le premier élément moulé de guidage est une rainure (12) ouverte en direction de la surface de séparation et perpendiculaire à celle-ci, entre la fiche de connexion et la pièce de culot dans une paroi latérale (8) du logement de prise (1).

6. Connecteur à fiches selon l'une des revendications 1 à 3, caractérisé en ce que le premier élément moulé de guidage est un tenon (9) en forme de barre ou ouvert en forme de tuyau en direction de la surface de séparation, tenon qui est moulé d'un seul tenant dans une partie du logement de prise (1), également ouverte en direction de la surface de séparation, et en ce que le second élément moulé de guidage de la pièce de culot enveloppe le tenon (9) en forme de barre ou de tuyau ou s'engrène comme une broche dans celui-ci.

7. Connecteur à fiches selon l'une des revendications 1 à 6, caractérisé en ce que les prises de courant embrochables (4) non tournées vers la pièce de culot sont situées sur plusieurs plans décalés les uns par rapport aux autres.

8. Connecteur à fiches selon l'une des revendications 1 à 7, caractérisé en ce que les prises de courant embrochables (4) non tournées vers la pièce de culot se composent d'une tubulure (14) faisant saillie en dehors du logement de prise (1), tubulure dont l'extrémité axialement extérieure est constituée d'un groupe de langues (16) radialement élastiques et munies d'éléments encliquetables (17) et dans le creux de laquelle, dans la zone axialement intérieure, sont logées, avec engagement positif et/ou par adhérence, une bague d'appui (18) et une bague d'étanchéité (19).

9. Connecteur à fiches selon l'une des revendications 1 à 8, caractérisé en ce que les prises de courant embrochables (10) tournées vers la pièce de culot se composent d'une tubulure axiale (13) qui aboutit pour l'essentiel au même niveau que la surface de séparation entre la fiche de connexion et la pièce de culot, dont l'extrémité axialement extérieure est constituée d'un groupe de langues radialement élastiques (15) et dans le creux de laquelle, dans la zone axialement intérieure, sont logées avec engagement positif et/ou par adhérence une bague d'appui (18) et une bague d'étanchéité (19).

10. Connecteur à fiches selon l'une des revendications 1 à 9, caractérisé en ce que le logement de prise (1) et le dispositif de verrouillage de décharge (20) se composent de matière synthétique et sont fabriqués avec un procédé de moulage par injection.

11. Connecteur à fiches selon l'une des revendications 1 à 10, caractérisé par son utilisation dans le système de tuyaux à dépression des véhicules automobiles.
